(19) Europäisches Patentamt
European Patent Office
Office européen des brevets

(11) EP 4 160 735 A1

(12) EUROPEAN PATENT APPLICATION

(43) Date of publication:
**05.04.2023 Bulletin 2023/14**

(21) Application number: **21200270.3**

(22) Date of filing: **30.09.2021**

(51) International Patent Classification (IPC):
***H01M 4/14*** (2006.01) ***H01M 10/12*** (2006.01) ***H01M 10/38*** (2006.01) *H01M 4/02* (2006.01)

(52) Cooperative Patent Classification (CPC):
**H01M 10/12; H01M 4/14; H01M 10/38;**
H01M 2004/024

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Solis Herrera, Arturo**
**CP20000 Aguascalientes (MX)**

(72) Inventor: **Solis Herrera, Arturo**
**CP20000 Aguascalientes (MX)**

(74) Representative: **Bals & Vogel Patentanwälte PartGmbB**
**Konrad-Zuse-Str. 4**
**44801 Bochum (DE)**

Remarks:
Amended claims in accordance with Rule 137(2) EPC.

# (54) ELECTRODE, ENERGY STORAGE, MELANIN

(57) The present invention relates to an electrode for an energy storage device, an energy storage device, an energy storage system and a method for assembling thereof. The electrode (1) for an energy storage device (100) comprises a body (2) and at least one jacket (10), and the body (2) has a cylindrical shape, wherein a symmetry axis of the body (2) is oriented along a z-direction, and wherein the jacket (10) comprises a helical shape (11), wherein the helical shape (11) essentially surrounds the body (2) helically and is oriented along the z-direction.

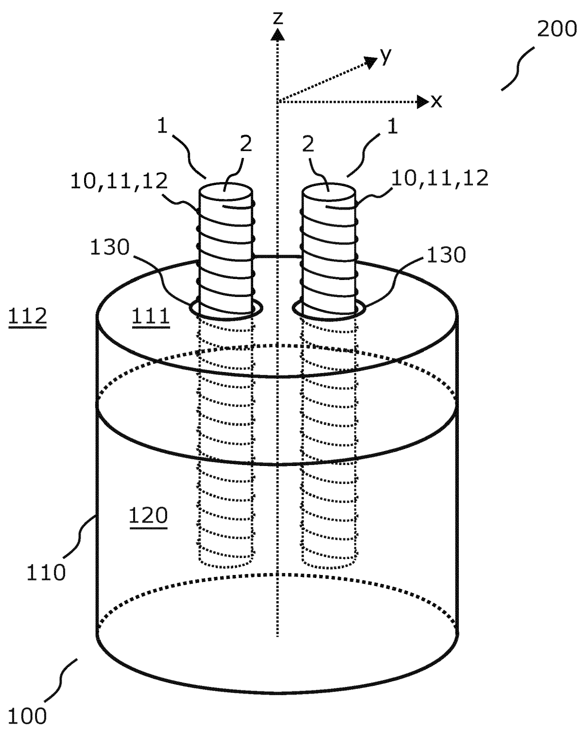


Fig. 3

EP 4 160 735 A1

## Description

The present invention relates to an electrode for an energy storage device, an energy storage device, an energy storage system and a method for assembling an energy storage system.

Batteries and rechargeable batteries (accumulators) are widely used as energy storage systems and to deliver electrical energy, for example in domestic electrical devices, medical devices like pacemakers, cars, bikes, mobile devices like laptops or smartphones et cetera.

However, the present energy storage systems have different shortcomings. The number of recharging cycles is limited. When the batteries are used or can't be recharged anymore, the recycling is delicate due to the environmentally unfriendly materials used. The production of batteries consumes a lot of energy. The electrodes of batteries are normally fixed to the battery, not mechanically robust, insufficiently protected, and/or not optimized regarding electrical conduction. Furthermore, the battery discharges over time, in particular if an undesired connection to the electrodes inside the battery or from the outside persists. In general the electrodes are inflexible or sensitive to external forces like bending.

The object of the present invention can be seen in solving at least parts of the aforementioned shortcomings of the present energy storage systems. Thus, it may be one object of the present invention to provide an improved electrode for an energy storage device, an energy storage device, an energy storage system and a method for assembling an energy storage system. In particular it may be one object of the present invention to provide an electrode for an energy storage device, an energy storage device, an energy storage system and a method for assembling an energy storage system which is more robust, more efficient, can be stored more easily, safer, and/or more environmentally friendly.

In general there are two types of electrodes, namely a cathode and an anode. A cathode is an electrode from which conventional current leaves a device, in particular a polarized electrical device. A conventional current describes the direction in which positive charges move, consequently, positive charges leave the device. Electrons have a negative electrical charge, so their movement is opposite to that of the conventional current flow and the electrons enter the device via the cathode. An anode is the corresponding counterpart to a cathode. Through the anode, the conventional current enters the device, and electrons leave the device. Normally, an energy storage system comprises at least one, in particular two electrodes. The electrodes can electrically be contacted from outside, in particular to provide power and/or energy to a consumer.

According to a first aspect of the invention, an electrode for an energy storage device comprising a body and at least one jacket is provided. The body has a cylindrical shape, wherein a symmetry axis of the body is oriented along a z-direction. The body comprises a diameter, in particular in an x-y-plane perpendicular to the z-direction. The body can be a three-dimensional solid, in particular a cylinder, which can be a prism with a circle as its base. The symmetry axis of the body can be a central axis inside of the body, in particular oriented along the length (e.g. height) of the body. The symmetry axis can comprise a constant distance to the mantle surface of the body. In other words, the diameter can be constant along the z-direction, in particular along the length of the body. The body (or cylindrical shape) can comprise a right shape, in particular wherein the circular ends (e.g. top and bottom of a cylinder) are perpendicular to the z-direction, wherein the symmetry axis is aligned along the z-direction, or in other words the symmetry axis is also perpendicular to the circular ends. The jacket comprises a helical shape, wherein the helical shape essentially surrounds the body helically and is oriented along the z-direction. In the context of the present invention, the z-direction can form a right hand system together with an x-direction and a y-direction, wherein the x-, y- and z-direction are perpendicular with respect to each other, wherein each point in space can be described by an x-, y- and z-coordinate. The electrode can simply be an electrode of an energy storage system, in particular a battery, which can be contacted mechanically and/or electrically, in particular for current and/or voltage supply. Preferably, the jacket surrounds the body at least partially, preferably over the full length of the body, to provide a mechanical protection and/or mechanical resistance for the body in particular increased resistance to elongation, compression, shear, torsion and/or compression. By covering the body of the electrode at least partially, the jacket can also provide a protection against external environmental influences, in particular corrosion protection. The jacket can be a simple cylinder mantle surrounding the body, in particular like a cylindrical shell. The jacket can also provide an improved electrical conductivity compared to the body, for example the jacket can comprise gold and the body can comprise copper. This can improve the general conductivity, particularly in the jacket, in particular if high frequencies are used with respect to the skin-effect. The jacket can also be used for improved contacting by external devices, in particular by providing a force-locking and/or form-locking connection, for example by a screwing device which can be engaged therewith. The jacket can comprise a helical shape essentially surrounding the body. In other words, the jacket can be a helix which is essentially oriented along the z-direction, like for example a corkscrew or spiral staircase. The body can also essentially be oriented along the z-direction, with the helical shape of the jacket surrounding the body. In other words, both the body and the jacket can be aligned such that both of them, are oriented along the z-direction and/or their symmetry axis are both aligned. This can lead to additional mechanical protection and/or increased mechanical stability of the electrode. The jacket can be fixed to the body of the electrode, in particular such that the jacket cannot be removed after production, for example in a force-locking, form-locking and/or material-locking way. This provides an optimized mechanical and/or electrical connection. A material-locking connection provides maximum stability, while a force-locking, and/or form-locking connection provides at least partly improved bending of the electrode. It is also possible, that the jacket can be detachably mounted to the body of the electrode. Like this, it is possible to replace the jacket and reuse the body of the electrode, which is particularly useful when using an expensive material for the body and a comparably cheap material for the jacket, or vice versa, in particular such that the jacket can be used for different electrodes. The body can also be surrounded by a first jacket, wherein the first jacket is surrounded by a second jacket, wherein the second jacket preferably is symmetrically aligned with the body and the first jacket and comprises a higher diameter. Like this, the first jacket can comprise a material for improved electrical conduction, e.g. gold, while the second jacket can comprise a material for improved mechanical stability, low cost and/or high wear resistance, e.g. steel. It is also possible to provide a first jacket surrounded by a second jacket, wherein the second jacket is surrounded by a third jacket. This can provide an optimized construction to optimize the contact resistance between the body and the jackets, such that the contact resistance is preferably minimized. It is also possible to provide a second and/or third jacket and/or outer jacket which is at least partially insulating, such that the electrode is safe to use and can be touched by hand. When using more than one jacket, it is possible to decrease the length of the outer jackets, such that a certain length of the jacket is exposed to the outside, and can easily be contacted from the outside. It is also possible to provide a first jacket which helically surrounds the body, and a second jacket which also helically surrounds the body, wherein the first and the second jacket are arranged in an interleaved design, in particular such that a nested helix is provided. This can lead to an improved mechanical stability compared to the case where only one jacket is used. This can also be advantageous since a combination of two jackets with different materials is possible, for example the first jacket comprises a material with high conductivity, like copper or gold, while the second jacket comprises a material with high mechanical stability, like steel.

Another aspect of the invention can be to provide an electrode for an energy storage device, wherein the body comprises a diameter, in particular in an x-y-plane perpendicular to the z-direction and/or the symmetry axis of the body. The diameter can be between 1 nm to 100 cm, preferably between 1 μm to 10 cm, especially preferred between 10 μm to 5 cm, ideally between 100 μm to 1 cm and/or a length between 1 mm to 1000 cm, preferably between 1 cm to 200 cm, especially preferred between 5 cm to 100 cm, ideally between 15 cm to 45 cm. A small diameter and/or length can be advantageous for microelectronic applications, where only limited space is available. A larger diameter and/or length can be advantageous for applications which require improved mechanical stability and/or high current or voltage supply, for example in domestic devices or construction tools.

Another aspect of the invention can be to provide an electrode for an energy storage device comprising a helical shape which can be a circular helix. The helical shape can comprise a constant radius and a constant gan angle between a tangent of the helical shape and an x-y-plane perpendicular to the z-direction. The gan angle can comprise between 1° to 80°, preferably between 4° to 50°, especially preferred between 6° to 40°, ideally between 10° to 25°. In addition, or alternatively, the helical shape can comprise a pitch, wherein the pitch defines the smallest distance along an axis parallel to the z-direction between two points of the helical shape with identical x- and y-coordinate values. The pitch can comprise between 1 μm to 100 cm, preferably between 10 μm to 10 cm, especially preferred between 100 μm to 1 cm, ideally between 1 mm to 5 mm. In other words a helical shape describes the shape of a helix. A small pitch provides maximum mechanical stability while a larger pitch decreases the electrical resistance of the jacket.

A helix can be a helix with a constant radius, in particular a helix which has a constant band curvature and a constant torsion. A helix can be described by the formulas

$$x(t) = cos(t), y(t) = sin(t), \text{ and/or } z(t) = t,$$

wherein as the parameter t increases, the point ($x(t)$,$y(t)$,$z(t)$) traces a right-handed helix comprising a pitch of $2\pi$ and a radius of 1 about the z-axis, wherein the x-, y-, and z-axis form a right-handed coordinate system. The terms x-, y-, z-axis and x-, y-, z-direction can be used interchangeably in the present invention.

The helix can surround the body of the electrode, preferably in a form-fitting manner. The body and the jacket can essentially form a screw and nut combination, such that the body can be detachably inserted in the jacket like a screw can be inserted in a nut by a screwdriver. This provides a mechanically robust attachment and the possibility to replace any of the two elements at any time. Therefore, the helix can be a right-handed helix, in particular to form a right-handed screw which can provide a connection to an appropriate right-handed thread for electrical and/or mechanical connection. Alternatively, the helix can be a left-handed helix, in particular to form a left-handed screw which can provide a connection to an appropriate left-handed thread for electrical and/or mechanical connection.

A circular helix can be described by the formulas

$$x(t) = a \cdot cos(t), y(t) = a \cdot sin(t), \text{ and/or } z(t) = b \cdot t,$$

wherein as the parameter *t* increases, the point ($x(t)$, $y(t)$, $z(t)$) traces a right-handed helix comprising a pitch of $2\pi \cdot b$ and a radius of *a* about the z-axis.

The radius can be between 0.5 nm to 50 cm, preferably between 0.5 μm to 5 cm, especially preferred between 5 μm to 2.5 cm, ideally between 50 μm to 1 cm. In particular, the radius can be adjusted such that the helix surrounds the body of the electrode, wherein the body and the helix are in mechanical and/or electrical connection. A smaller radius decreases the material necessary and reduces the costs. A larger radius can provide a gap between the body and the jacket for easier replacement of one of the two elements.

The gan angle can describe a gradient of the helix. In other words it can define the angle between a tangent of the helix and an x-y-plane, in particular in a cross section. A small gan angle can provide an improved protection of the body of the electrode, while a larger gan angle can reduce the amount of material used for the helix and/or reduce the total resistance.

The pitch can describe the spacing between comparable points after the helix has completed a full turn of 360° (or $2\pi$). In other words, it can describe the spacing between two comparable points on the helix. In particular, the pitch can describe the height of one complete helix turn, measured parallel to the axis of the helix.

The helix can comprise a total length, in particular in z-direction, between 1 mm to 1000 cm, preferably between 1 cm to 200 cm, especially preferred between 5 cm to 100 cm, ideally between 15 cm to 45 cm. The total length of the helix can be aligned to the length of the body of the electrode, in particular, the total length of the helix can be essentially equal to the length of the body of the electrode. A small radius and/or total length can be advantageous for microelectronic applications, where only limited space is available. A larger radius and/or total length can be advantageous for applications which require improved mechanical stability and/or high voltage supply, for example in domestic devices or construction tools.

The helix can simply be cropped and/or cut at both ends in z-direction. The ends of the helix can be mechanically and/or electrically connected to the body of the electrode, for example by positive locking, friction locking and/or material locking, in particular by soldering, welding, gluing, and/or pressing. Therefore, soldering can be advantageous to reduce the costs and/or to allow for an easy repair in case the connection is broken. In an advantageous embodiment of the invention, a first ring is attached to the top end of the body and a second ring is attached to the bottom end of the body to achieve a connection between the ends of the helix and the body. This mechanical and/or electrical connection can be achieved by positive locking, friction locking and/or material locking, in particular by clamping, form pressing, or welding which provides an irreversible and low cost connection. Alternatively, the connection can be achieved by a nut and bolt connection, wherein the top and bottom end of the body comprise a thread and the ring is a nut which can be reversibly attached to the thread in order to compress the helix and achieve a mechanical and/or electrical connection between the helix and the body.

The helix can comprise a thickness between 1 nm to 10 cm, preferably between 1 μm to 1 cm, especially preferred between 100 μm to 6 mm, ideally between 2 mm to 5 mm. A small thickness, in particular between 1 μm and 3,4 mm, preferably below 3,5 cm, can be preferred for microelectronic applications, to reduce the weight, to reduce the cost, and/or to ease the assembly. A larger thickness, in particular between 3,6 mm and 1 cm, preferably above 3,5 mm, can be preferred to maximize the mechanical stability and/or reduce electrical losses. In other words, the thickness can describe the thickness of a wire used to form the helix.

The helix can comprise an essentially round cross section. In other words, the helix can essentially be a round wire or cylinder that is wound up to form the helix. A round cross section can be advantageous for easy and/or cheap production. Alternatively, the helix can also provide an essentially rectangular or square shaped cross section. This can be advantageous to maximize the area of connection between the body of the electrode and the jacket, which can improve the mechanical and/or electrical connection. The helix can therefore comprise an inner part separated from a surrounding outer part, in particular like an insulated wire or coaxial cable. The inner part can comprise conducting material while the outer part can comprise insulating material. This can be advantageous to achieve an electrical isolation between the helix and the body of the electrode. Alternatively, the inner part can comprise an insulating material while the outer part comprises a conducting material. This can be advantageous to provide an electrical connection between the outer part and the body of the electrode while the inner part provides mechanical stability of the helix.

Another aspect of the invention can be to provide an electrode for an energy storage device, wherein the body and/or jacket comprise at least one of the materials copper, aluminum, carbon, tungsten, gold, platinum, silver, molybdenum, gold, or alloys thereof. The electrode can comprise a body, which can be a simple cylinder, for example made of copper, for low electrical resistance and/or easy production. The body and/or the jacket may comprise chamfered or rounded edges to mitigate the tip effect, corona discharge and/or for safety reasons. Aluminum or carbon can be advantageous to reduce the weight of the electrode. Silver, copper or gold comprise a high electrical conductivity and low resistance. Silver can also provide high thermal conductivity and ductility, which can be advantageous when the form of the electrode needs to be adjusted. Tungsten comprises a high melting and boiling point and is particularly well suited for high temperatures. Platin comprises a high density and provides a high corrosion protection, and can advantageously be used in wet or windy environments or underwater. Molybdenum can be used in alloys to increase the strength,

corrosion and heat resistance. In an advantageous embodiment of the present invention, the body comprises copper and the jacket comprises platin, gold or silver, in particular to optimize the electrical conductivity of the jacket.

Another aspect of the invention can be to provide an electrode for an energy storage device, wherein the electrode comprises at least one coating. The coating preferably covers a surface of the electrode essentially homogeneously with a coating thickness, wherein the coating thickness comprises a thickness between 1 pm to 10 mm, preferably between 1 nm to 1 mm, especially preferred between 1 μm to 100 μm, ideally between 10 μm to 50 μm. A low thickness provides optimum cost efficiency while a large thickness maximizes the effect the additional material provides, e.g. mechanical stability. In addition or alternatively, the coating preferably comprises at least one of the materials copper, aluminum, carbon, tungsten, gold, platinum, argentum, molybdenum, gold, or alloys thereof. In other words, a coating in the context of the present invention can be an outer shell or additional layer surrounding the electrode, in particular the surface of the body and/or the jacket. Therefore, the coating can fully surround the body and/or jacket. Alternatively or in addition, the coating can only surround the mantle surface of the body, wherein only the two ends on the top and bottom of the body are not being coated, in particular like a cylindrical shell. This can allow a connection to the body itself without connecting the coating first. The coating can be applied by vapor deposition. The coating can be applied by providing a simple mechanical shell where the body is fit into. The coating can provide an additional protective layer to protect the body and/or jacket, in particular the material thereof, from environmental influences. In other words, the coating can be used as protective seal. It is also possible to provide two or three coatings which each form an additional layer, in particular for increased protection. For example, the body can comprise carbon, and the coating can comprise an alloy of copper, gold, and one of platinum, aluminum or silver. Preferably, the helical jacket comprises a jacket coating, wherein the helical shape of the jacket comprises a coating comprising at least one of the materials copper, aluminum, carbon, tungsten, gold, platinum, argentum, molybdenum, gold, or alloys thereof. This can lead to increased electrical conductivity and/or mechanical stability.

According to a second aspect of the invention, an energy storage device comprising a housing is provided. The housing is oriented along a z-direction, wherein the housing comprises an inside comprising a substance. The housing separates the inside from the outside. The substance comprises at least $C_{17}H_{20}N_2O_3$ (melanin) and/or a compound A (in particular 3-(1-Methylpyrrolidin-2-yl)pyridine, 3-[(2S)-1-Methyl-2-pyrrolidinyl]pyridine, (S)-3-[1-Methylpyrrolidin-2-yl]pyridine and/or $C_{10}H_{14}N_2$) or an acceptable substitute in particular a salt thereof

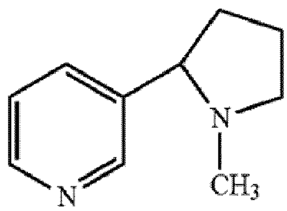

and/or

a compound B (in particular salicylic acid, phenol-2-carboxylate, $HOC_6H_4COOH$ and/or $C_7H_6O_3$), or a pharmaceutically acceptable substitute in particular a salt thereof

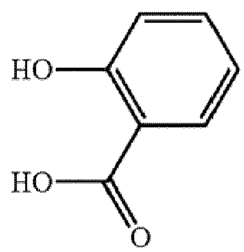

Another aspect of the invention can be to provide an energy storage device, wherein the substance comprises a gaseous, liquid or solid state of aggregation. The housing can be seen as a shelter for the substance, in particular the substance cannot escape the housing from the inside to the outside. The housing can be at least partly filled with the substance and/or additional material, which can comprise a gaseous, liquid or solid state of aggregation. It can be desirable to first provide the substance in a liquid state of aggregation, then insert at least one and preferably two electrodes in the substance, then heat the substance which accordingly changes to an at least partially solid state of aggregation, such that the electrode or the electrodes are mechanically fixed inside the substance. Preferably, the substance is at least partly liquid close to the at least one electrode, in particular to provide an electrical connection and still allowing the removal or insertion of the electrode. The substance can comprise compound A and compound B mixed

at a ratio of about 1:10, 1:8, 1:6, 1:4, 1:2, 1:1, 1.5:1, 2:1, 4:1, 6:1, 8:1 or 10:1, by weight. A higher amount of compound A can provide improved voltage, while a higher amount of compound B can reduce the costs for a comparable volume.

The additional material can comprise stabilizers, in particular stabilizers that when heated transform the substance from a liquid and/or gaseous aggregation at least partly to a solid state of aggregation, in particular when at least one, and preferably two, electrodes are immersed in the substance. The additional material can comprise sulfuric acid $H_2SO_4$ as an electrolyte. A combination of sulfuric acid and melanin can provide improved mobility of ions, which can result in increased voltage and/or amperage of an energy storage device. The additional material can comprise a phase-change material, for example sodium acetate trihydrate. This can allow the substance and/or additional material to be liquid first, in particular due to heating and subsequent cooling down, and crystallize when nuclei of crystallization are provided by a means of activation, wherein the means of activation can be a simple metal blade which is immersed in the substance and can be bended mechanically to provide nuclei of crystallization. In other words, the liquid state of the substance and/or the additional material can be transformed to a solid state when desired. Therefore, the housing of the energy storage device can comprise a material which does not provide nuclei of crystallization, in particular plastic.

Another aspect of the invention can be to provide an energy storage device, wherein the housing comprises at least one opening for at least one electrode to pass through the housing in particular from the inside of the housing to the outside. The housing can comprise at least one opening, preferably at the top in z-direction. An opening can be a hole in the material of the housing, in particular a round hole comprising a radius which can be between 0.6 nm to 51 cm, preferably between 0.6 μm to 6 cm, especially preferred between 6 μm to 2.6 cm, ideally between 51 μm to 1.1 cm. Like this, it can be assured that an electrode, in particular an electrode comprising a jacket, can be inserted into the at least one opening. The at least one opening can comprise a thread for inserting, in particular screwing, an electrode with a jacket into it. The at least one opening can comprise a seal, in particular a round seal, preferably comprising a toroidal shape, to seal the housing, in particular by being attached along the circumference of the opening between the boarder of the opening and an electrode inserted therein, wherein preferably the inside of the housing is separated and/or isolated from the outside. This prevents external environmental influences to influence the inside of the housing, in particular the substance and/or additional material inside the housing, which can increase the longevity and/or stability of the energy storage device. This can also prevent that gaseous, liquid and/or solid materials enter or leave the housing, in particular, gaseous, liquid and/or solid parts of the substance.

Another aspect of the invention can be to provide an energy storage device, wherein the housing comprises at least one cover for releasably closing the at least one opening, in particular if no electrode is inserted in the housing. The opening can be used to insert the electrode from the outside. A cover can be used to close the at least one opening, in particular if no electrode is inserted. This can be advantageous for storing the energy storage device separately from an electrode, in particular if no usage is currently desired and/or to save space. The cover can comprise a means for sealing the opening, in particular a valve or comparable means. The cover can comprise a screw cap, wherein the opening comprises a first thread in which a second thread of the cover can be releasably inserted, which can result in a particularly robust sealing of the housing. This can also result in a compression of the inside of the housing. In other words, by using the cover for closing the housing, the substance and/or additional material inside the housing can be pressurized. This can be advantageous for storage of the energy storage device.

Another aspect of the invention can be to provide an energy storage device, wherein the housing comprises a cylindrical shape comprising a diameter between 100 μm to 100 cm, preferably between 1 mm to 40 cm, especially preferred between 5 mm to 20 cm, ideally between 1 cm to 10 cm. In addition or alternatively, the housing can comprise a length between 1 mm to 10 m, preferably between 1 cm to 200 cm, especially preferred between 5 cm to 100 cm, ideally between 15 cm to 45 cm. In addition or alternatively, the housing can comprise a sheath thickness between 1 μm to 100 cm, preferably between 10 μm to 20 cm, especially preferred between 100 μm to 10 cm, ideally between 1 mm to 1 cm. A large diameter, in particular between 5,5 cm and 100 cm, preferably above 5 cm, a large length, in particular between 31 cm and 10 m, preferably above 30 cm, and/or a large sheath thickness, in particular between 5,5 mm and 100 cm, preferably above 5 mm, can provide a large volume inside of the housing and high robustness, which allows for a large amount of substance being inserted in the housing and consequently high voltage and/or amperage of the energy storage device. A small diameter, in particular between 100 μm and 4,5 cm, preferably below 5 cm, a small length, in particular between 1 mm and 29 cm, preferably below 30 cm, and/or a small sheath thickness, in particular between 1 μm and 4,5 mm, preferably below 5 mm, can provide a small volume inside of the housing, which allows for a small amount of substance being inserted in the housing and consequently low voltage and/or amperage of the energy storage device, which is useful for microelectronic applications, to save space, costs, material and/or substance. The housing can comprise plastic, metal and/or ceramic. Plastic is cheap and reduces the weight of the housing. In particular, PVC or a recyclable plastic can be used. In addition or alternately, the housing can comprise, copper, aluminum, carbon, tungsten, gold, platinum, argentum, molybdenum, gold, or alloys thereof. These materials are robust and conductive, which allows them to form an electrical connection to the ground below the energy storage system. The housing can comprise an inner and/or outer shield, in particular an insulating shield, which can be used for insulation and/or for protection against liquids, to prevent corrosion and/or wear. The housing can comprise at least one separator, in particular

a separator located essentially between two electrodes, wherein the separator separates the two electrodes by a permeable membrane and preferably only allows ionic charge carriers to pass while electrons preferably cannot pass the separator. The separator can prevent a short circuit between different, in particular two, electrodes. The separator can comprise a polymeric membrane forming a microporous layer. The separator can comprise nonwoven fibers (cotton, nylon, polyesters, glass), polymer films (polyethylene, polypropylene, tetrafluoroethylene, polyvinyl chloride), ceramic which is robust and naturally occurring substances (rubber, asbestos, wood), which are sustainable, renewable and/or recyclable. The separator can preferably comprise perforated, corrugated polyvinyl chloride (PVC), which is cheap and robust.

According to a third aspect of the invention an energy storage system is provided. The energy storage system provides electrical energy, in particular to at least one consumer. The energy storage system comprises at least one electrode according to the first aspect of the invention, in particular according to claims 1 to 5. Furthermore, the energy storage system comprises an energy storage device according to the second aspect of the invention, in particular according to claims 6 to 10. At least one, preferably two, electrodes are insertable in the energy storage device, wherein the electrode provides an electrical connection at least between the substance and/or additional material, and at least one consumer located outside of the housing of the energy storage device. In other words, the energy storage system can form a battery or rechargeable battery. The consumer can be an electrical device, in particular external electrical device. The consumer can be a microelectronic device, a processor, an LED, or a car, wherein the application depends on the size of the energy storage system, in particular the voltage and/or amperage which is achieved. Therefore, the energy storage system can be connected from the outside via the at least one electrode, for example using a clamping device or screwing device. Preferably, a voltage can be tapped between two electrodes of the energy storage system to provide power to the consumer. In particular, a first electrode can be an anode and a second electrode can be the cathode of a battery. In other words, this process corresponds to a discharge of the energy storage system. According to another aspect of the invention, two energy storage systems can be provided each comprising at least one electrode, wherein a voltage can be tapped between electrodes of different energy storage systems.

The at least one electrode can essentially be immersed in the energy storage device, wherein preferably the at least one electrode is inserted in the substance and/or additional material when these are at least partly in a liquid or gaseous state of aggregation, which preferably are transformed at least partially to a solid state of aggregation, wherein the electrodes are essentially fixed. The substance and/or additional material in the housing of the energy storage device is preferably predominantly solid in regions near the electrode, while between the electrodes a liquid portion can be dominant. This can increase the charge carrier transport inside the energy storage device, in particular the mobility of ionic charge carriers. Alternatively, the housing of the energy storage device can comprise the substance and/or materials in predominantly solid or exclusively solid state of aggregation. This can result in a particularly robust construction, wherein the electrodes cannot be removed even when strong external forces are applied, in particular due to the helical shape of the jacket of the electrode.

Another aspect of the invention can be to provide an energy storage system, wherein a battery unit is formed by insertion of at least one electrode in the energy storage device, wherein the battery unit can be recharged by connecting the at least one electrode to a voltage supply. Preferably, two electrodes can be inserted in the energy storage device. In other words, an accumulator is provided, which preferably can be recharged by connection of the at least one electrode to a voltage supply, in particular by connection of a first electrode to a first pole of a voltage supply, and a second electrode to a second pole of a voltage supply. This can correspond to a charging process of the energy storage system. For example, the energy storage system can be connected to an external DC voltage source which provides power over a time interval of for example 12 hours.

According to a fourth aspect of the invention, a method for assembling and/or disassembling of an energy storage device is provided. Therefore, a method for assembling can comprise any one or more of the steps a), b), c), d), e), and/or f). The method comprises at least one of the following steps:

a) Opening at least one cover of an energy storage device, in particular according to the second aspect of the invention and/or one of the claims 6 to 10, wherein in particular the at least one cover covers at least one opening in the housing of the energy storage device

b) inserting at least one electrode, in particular according to the first aspect of the invention and/or one of the claims 1 to 5, through the opening in the energy storage device, in particular from the outside of the housing at least partly to the inside of the housing, to electrically contact the at least one electrode to a substance which at least partly fills the inside of the housing

c) supply voltage to an consumer connected to the at least one electrode.

Preferably, a seal is positioned essentially in the opening between the steps a) and b) before the electrode is inserted inside of the housing, in particular to prevent the substance from leaving the housing while the at least one electrode is inserted.

Step b) can comprise substantially screwing the at least one electrode into the opening, in particular by engaging the jacket with a thread of the opening. Accordingly, step e) described below can comprise a complementary movement, in particular disengaging the jacket with the thread.

Another aspect of the invention can be to provide a method for assembling and/or disassembling of an energy storage device. Therefore, at least one of the following steps is comprised:

d) disconnecting the consumer connected to the at least one electrode

e) removing the at least one electrode by moving the at least one electrode from the inside of the housing through the opening to the outside

f) closing the at least one cover of the energy storage device, in particular to allow for a separate storage of the sealed energy storage device and the at least one electrode, and to prevent the substance from leaving the housing.

Further features and details of the invention result from the claims, the description and the drawings. Features and details which have been described in connection with the electrode naturally also apply in connection with the energy storage device, the energy storage system, and/or the method for assembling thereof and vice versa in each case, so that with regard to the disclosure concerning the individual aspects of the invention reference is or can always be made mutually.

Further aspects of the invention can be derived from the following description of some embodiments of the invention, which are shown schematically in the figures. All features and/or advantages derived from the claims, the description or the drawings, including constructional details, spatial arrangements and process steps, may be essential to the invention both individually and in a wide variety of combinations. It should be noted that the figures are descriptive only and are not intended to limit the invention in any way. They show schematically:

| | |
|---|---|
| Figure 1a, b | an embodiment of an electrode for an energy storage device comprising a body and a jacket, |
| Figure 2a, b, | can embodiment of an electrode for an energy storage device comprising a coating (solid lines) and a second coating (dotted line), and |
| Figure 3 | an embodiment of an energy storage system comprising an energy storage device and two electrodes. |

In the following figures, identical reference signs are used for the same technical features even for different embodiments.

Figure 1a and Figure 1b show an electrode 1 comprising a body 2. The body 2 comprises a cylindrical shape which is symmetrical with respect to the z-direction. The z-direction is perpendicular to the x-direction and both the z- and the x-direction are perpendicular to the y-direction, such that the three of them form a coordinate system according to the right-hand-rule. The electrode 1 comprises a jacket 10, comprising a helical shape 11 which essentially surrounds the body 2 helically. The jacket 10 is also oriented along z-direction. The helical shape 11 is a circular helix 12. Figure 1a is a perspective view mimicking a 3D electrode. Figure 1b shows the cross section of the electrode 1 in the x-z-plane. Starting from the bottom (negative or low z-coordinates), the helical shape 11 surrounds the body 2 of the electrode 1 such that the helical shape 11 enters into the x-z-plane on the left (increasing distance from the observer, denoted with circles comprising an "x") and leaves the x-z-plane on the right (decreasing distance to the observer, denoted with circles comprising a dot). The helical shape 11 comprises a constant radius 13 and a constant gan angle 15 which is measured between the x-y-plane (or a parallel plane thereto) and a tangent 14 of the helical shape. The pitch 16 corresponds to the smallest distance along an axis parallel to the z-direction between two points of the helical shape 11.

Figure 2a shows the electrode of Figure 1b and a coating 4 surrounding the surface 3 of the electrode 1. Since no coating is present at the top and at the bottom, the coating 4 also has a cylindrical shape. In other words, only the mantel surface of the surface 3 is covered by the coating 4 while the top and bottom of the body 2 are uncovered. In addition to the first coating 4 drawn in solid lines, Figure 2a also shows a second coating 4 drawn in dotted lines, such that the second coating forms a cylinder surrounding the first coating.

Figure 2b shows the first and second coating according to Figure 2a. However, the first coating also covers the top and bottom part of the body 2 of the electrode 1, such that the whole body 2 is surrounded by the first coating 4. The second coating 4 also surrounds the first coating 4 in all directions. Consequently, the second coating 4 seals the first coating 4, and the first coating seals the body 2 of the electrode.

Figure 2c shows the first and second coating 4 from Figure 2a and Figure 2b in the x-y-plane. The first coating 4 surrounds the body 2 of the electrode 1 symmetrically. The second coating 4 surrounds both the body 2 of the electrode and the first coating symmetrically. The first coating 4 is attached to the surface 3 of the body 2. It can be one aspect of the invention, that a jacket as shown in Figure 1a and Figure 1b surrounds the body 2 which comprises at least one coating.

Figure 3 shows an energy storage system 200 comprising two electrodes 1 and an energy storage device 100.

Each of the two electrodes comprises a body 2 and a jacket 10, which comprises a helical shape 11. The helical shape 11 is a circular helix 12 according to Figure 1a and Figure 1b. The energy storage device 100 comprises a housing 110 separating the inside 111 from the outside 112. The housing comprises a cylindrical shape and is symmetrically with respect to the z-direction. The inside 111 is partly filled with a substance 120. The two electrodes are immersed in the substance 120 to achieve an electrical connection between the electrode and the substance. The electrodes each pass through an opening 130 in the housing 110 and can consequently be connected to a consumer (not shown) located at the outside 112. It is also possible to recharge the energy storage system 200 via the two electrodes. When no electrode is inserted in the housing 110 via the opening 130, the opening 130 can be releasably closed by a cover (not shown).

The above description of the figures and the embodiments describes the present invention exclusively in the context of examples. Of course, individual features of the embodiments can be freely combined with each other, provided that this is technically reasonable, without leaving the scope of the present invention.

**Reference signs**

1 electrode
2 body
3 surface
4 coating

10 jacket
11 helical shape
12 circular helix
13 radius
14 tangent
15 gan angle
16 pitch

100 energy storage device
110 housing
111 inside
112 outside
120 substance
130 opening

200 energy storage system

**Claims**

1. Electrode (1) for an energy storage device (100) comprising a body (2) and at least one jacket (10),
**characterized in that,**

the body (2) has a cylindrical shape, wherein a symmetry axis of the body (2) is oriented along a z-direction, wherein the body (2) comprises a diameter, in particular in an x-y-plane perpendicular to the z-direction, wherein the jacket (10) comprises a helical shape (11), wherein the helical shape (11) essentially surrounds the body (2) helically and is oriented along the z-direction.

2. Electrode (1) for an energy storage device (100) according to claim 1,
**characterized in that,**

the body comprises a diameter between 1 nm to 100 cm, preferably between 1 μm to 10 cm, especially preferred between 10 μm to 5 cm, ideally between 100 μm to 1 cm,
and/or a length between 1 mm to 1000 cm, preferably between 1 cm to 200 cm, especially preferred between 5 cm to 100 cm, ideally between 15 cm to 45 cm.

3. Electrode (1) for an energy storage device (100) according to one of the preceding claims,

**characterized in that,**

the helical shape (11) is a circular helix (12), wherein the helical shape (11) comprises a constant radius (13) and constant gan angle (15) between a tangent (14) of the helical shape (11) and an x-y-plane perpendicular to the z-direction,
wherein the gan angle (15) comprises between 1° to 80°, preferably between 4° to 50°, especially preferred between 6° to 40°, ideally between 10° to 25°,
and/or wherein the helical shape (11) comprises a pitch (16), wherein the pitch (16) defines the smallest distance along an axis parallel to the z-direction between two points of the helical shape (11) with identical x- and y-coordinate values, wherein the pitch (16) comprises between 1 μm to 100 cm, preferably between 10 μm to 10 cm, especially preferred between 100 μm to 1 cm, ideally between 1 mm to 5 mm.

4. Electrode (1) for an energy storage device (100) according to one of the preceding claims,
**characterized in that,**
the body (2) and/or jacket (10) comprises at least one of the materials copper, aluminum, carbon, tungsten, gold, platinum, argentum, molybdenum, gold, or alloys thereof.

5. Electrode (1) for an energy storage device (100) according to one of the preceding claims,
**characterized in that,**

the electrode (1) comprises at least one coating (4), wherein the coating (4) preferably covers a surface (3) of the electrode (1) essentially homogeneously with a coating thickness, wherein the coating thickness comprises a thickness between 1 pm to 10 mm, preferably between 1 nm to 1 mm, especially preferred between 1 μm to 100 μm, ideally between 10 μm to 50 μm,
and/or wherein the coating (4) preferably comprises at least one of the materials copper, aluminum, carbon, tungsten, gold, platinum, argentum, molybdenum, gold, or alloys thereof.

6. Energy storage device (100) comprising a housing (110) oriented along a z-direction, wherein the housing (110) comprises an inside (111) comprising a substance (120), wherein the housing (110) separates the inside (111) from the outside (112),
**characterized in that,**
the substance (120) comprises at least $C_{17}H_{20}N_2O_3$ and/or a compound A, or an acceptable substitute in particular a salt thereof

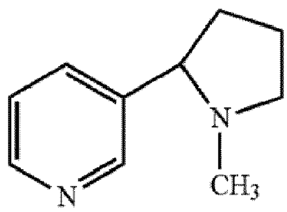

and/or
a compound B, or a pharmaceutically acceptable substitute in particular a salt thereof

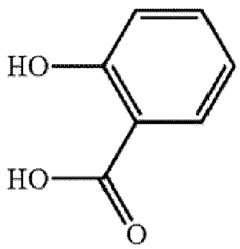

7. Energy storage device (100) according to claim 6,
**characterized in that,**
the substance (120) comprises a gaseous, liquid or solid state of aggregation.

**8.** Energy storage device (100) according to one of the preceding claims 6 to 7,
**characterized in that,**
the housing (110) comprises at least one opening (130) for at least one electrode (1) to pass through the housing (110), in particular from the inside (111) of the housing (110) to the outside (112).

**9.** Energy storage device (100) according to one of the preceding claims 6 to 8,
**characterized in that,**
the housing (110) comprises at least one cover for releasably closing the at least one opening (130), in particular if no electrode (1) is inserted in the housing (110).

**10.** Energy storage device (100) according to one of the preceding claims 6 to 9,
**characterized in that,**

the housing (110) comprises a cylindrical shape comprising a diameter between 100 μm to 100 cm, preferably between 1 mm to 40 cm, especially preferred between 5 mm to 20 cm, ideally between 1 cm to 10 cm,
and/or a length between 1 mm to 10 m, preferably between 1 cm to 200 cm, especially preferred between 5 cm to 100 cm, ideally between 15 cm to 45 cm,
and/or a sheath thickness between 1 μm to 100 cm, preferably between 10 μm to 20 cm, especially preferred between 100 μm to 10 cm, ideally between 1 mm to 1 cm.

**11.** Energy storage system (200) for providing electrical energy comprising at least one electrode (1) according to the claims 1 to 5, and an energy storage device (100) according to claims 6 to 10
**characterized in that,**

the at least one electrode (1) is insertable in the energy storage device (100),
wherein the electrode (1) provides an electrical connection at least between the substance (120) and at least one consumer located outside (112) of the housing (110) of the energy storage device (100).

**12.** Energy storage system (200) according to claim 11,
**characterized in that,**
a battery unit is formed by insertion of at least one electrode (1) in the energy storage device (100), wherein the battery unit can be recharged by connecting the at least one electrode (1) to a voltage supply.

**13.** Method for assembling an energy storage system (200),
**characterized in that,**
at least one of the following steps is comprised

a) opening at least one cover of an energy storage device (100) according to one of the claims 6 to 10, wherein in particular the at least one cover covers at least one opening (130) in the housing (110) of the energy storage device (100),
b) inserting at least one electrode (1) according to one of the claims 1 to 5 through the opening (130) in the energy storage device (100), in particular from the outside (112) of the housing at least partly to the inside (111) of the housing, to electrically contact the at least one electrode (1) to a substance (120) which at least partly fills the inside (111) of the housing (110),
c) supply voltage to an consumer connected to the at least one electrode (1).

**14.** Method for assembling an energy storage system (200) according to claim 13,
**characterized in that,**
at least one of the following steps is comprised

d) disconnecting the consumer connected to the at least one electrode (1)
e) removing the at least one electrode (1) by moving the at least one electrode (1) from the inside (111) of the housing (100) through the opening (130) to the outside (112)
f) closing the at least one cover of the energy storage device (100), in particular to allow for a separate storage of the energy storage device (100) and the at least one electrode (1), and to prevent the substance (120) from leaving the housing (100).

**Amended claims in accordance with Rule 137(2) EPC.**

1. Electrode (1) for an energy storage device (100) comprising a body (2) and at least one jacket (10), **characterized in that,**

   the body (2) has a cylindrical shape, wherein a symmetry axis of the body (2) is oriented along a z-direction, wherein the body (2) comprises a diameter, in particular in an x-y-plane perpendicular to the z-direction, wherein the jacket (10) comprises a helical shape (11), wherein the helical shape (11) essentially surrounds the body (2) helically and is oriented along the z-direction,
   wherein the electrode (1) comprises at least one coating (4), wherein the coating (4) covers a surface (3) of the electrode (1) essentially homogeneously with a coating thickness, wherein the coating thickness comprises a thickness between 1 pm to 10 mm, preferably between 1 nm to 1 mm, especially preferred between 1 μm to 100 μm, ideally between 10 μm to 50 μm,
   and/or wherein the coating (4) preferably comprises at least one of the materials copper, aluminum, carbon, tungsten, gold, platinum, argentum, molybdenum, gold, or alloys thereof.

2. Electrode (1) for an energy storage device (100) according to claim 1, **characterized in that,** the body comprises a diameter between 1 nm to 100 cm, preferably between 1 μm to 10 cm, especially preferred between 10 μm to 5 cm, ideally between 100 μm to 1 cm, and/or a length between 1 mm to 1000 cm, preferably between 1 cm to 200 cm, especially preferred between 5 cm to 100 cm, ideally between 15 cm to 45 cm.

3. Electrode (1) for an energy storage device (100) according to one of the preceding claims, **characterized in that,**

   the helical shape (11) is a circular helix (12), wherein the helical shape (11) comprises a constant radius (13) and constant gan angle (15) between a tangent (14) of the helical shape (11) and an x-y-plane perpendicular to the z-direction,
   wherein the gan angle (15) comprises between 1° to 80°, preferably between 4° to 50°, especially preferred between 6° to 40°, ideally between 10° to 25°,
   and/or wherein the helical shape (11) comprises a pitch (16), wherein the pitch (16) defines the smallest distance along an axis parallel to the z-direction between two points of the helical shape (11) with identical x- and y-coordinate values, wherein the pitch (16) comprises between 1 μm to 100 cm, preferably between 10 μm to 10 cm, especially preferred between 100 μm to 1 cm, ideally between 1 mm to 5 mm.

4. Electrode (1) for an energy storage device (100) according to one of the preceding claims, **characterized in that,** the body (2) and/or jacket (10) comprises at least one of the materials copper, aluminum, carbon, tungsten, gold, platinum, argentum, molybdenum, gold, or alloys thereof.

5. Energy storage device (100) comprising a housing (110) oriented along a z-direction,

   wherein the housing (110) comprises an inside (111) comprising a substance (120),
   wherein the housing (110) separates the inside (111) from the outside (112), **characterized in that,**
   the substance (120) comprises at least $C_{17}H_{20}N_2O_3$ and/or a compound A, or an acceptable substitute in particular a salt thereof

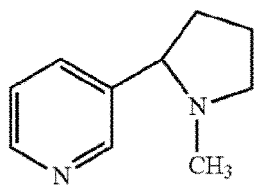

   and/or
   a compound B, or a pharmaceutically acceptable substitute in particular a salt thereof

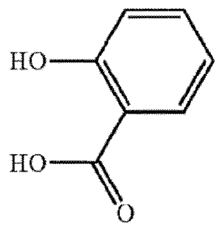

wherein the housing (110) comprises at least one opening (130) for at least one electrode (1) to pass through the housing (110), in particular from the inside (111) of the housing (110) to the outside (112),
wherein the housing (110) comprises at least one cover for releasably closing the at least one opening (130), in particular if no electrode (1) is inserted in the housing (110).

**6.** Energy storage device (100) according to claim 5,
**characterized in that,**
the substance (120) comprises a gaseous, liquid or solid state of aggregation.

**7.** Energy storage device (100) according to one of the preceding claims 5 to 6, **characterized in that,**

the housing (110) comprises a cylindrical shape comprising a diameter between 100 μm to 100 cm, preferably between 1 mm to 40 cm, especially preferred between 5 mm to 20 cm, ideally between 1 cm to 10 cm,
and/or a length between 1 mm to 10 m, preferably between 1 cm to 200 cm, especially preferred between 5 cm to 100 cm, ideally between 15 cm to 45 cm,
and/or a sheath thickness between 1 μm to 100 cm, preferably between 10 μm to 20 cm, especially preferred between 100 μm to 10 cm, ideally between 1 mm to 1 cm.

**8.** Energy storage system (200) for providing electrical energy comprising at least one electrode (1) according to the claims 1 to 4, and an energy storage device (100) according to claims 5 to 7
**characterized in that,**

the at least one electrode (1) is insertable in the energy storage device (100),
wherein the electrode (1) provides an electrical connection at least between the substance (120) and at least one consumer located outside (112) of the housing (110) of the energy storage device (100).

**9.** Energy storage system (200) according to claim 8,
**characterized in that,**
a battery unit is formed by insertion of at least one electrode (1) in the energy storage device (100), wherein the battery unit can be recharged by connecting the at least one electrode (1) to a voltage supply.

**10.** Method for assembling an energy storage system (200),
**characterized in that,**
at least one of the following steps is comprised

a) opening at least one cover of an energy storage device (100) according to one of the claims 5 to 7, wherein in particular the at least one cover covers at least one opening (130) in the housing (110) of the energy storage device (100),
b) inserting at least one electrode (1) according to one of the claims 1 to 4 through the opening (130) in the energy storage device (100), in particular from the outside (112) of the housing at least partly to the inside (111) of the housing, to electrically contact the at least one electrode (1) to a substance (120) which at least partly fills the inside (111) of the housing (110),
c) supply voltage to an consumer connected to the at least one electrode (1).

**11.** Method for assembling an energy storage system (200) according to claim 10, **characterized in that,**
at least one of the following steps is comprised

d) disconnecting the consumer connected to the at least one electrode (1)
e) removing the at least one electrode (1) by moving the at least one electrode (1) from the inside (111) of the

housing (100) through the opening (130) to the outside (112)
f) closing the at least one cover of the energy storage device (100), in particular to allow for a separate storage of the energy storage device (100) and the at least one electrode (1), and to prevent the substance (120) from leaving the housing (100).

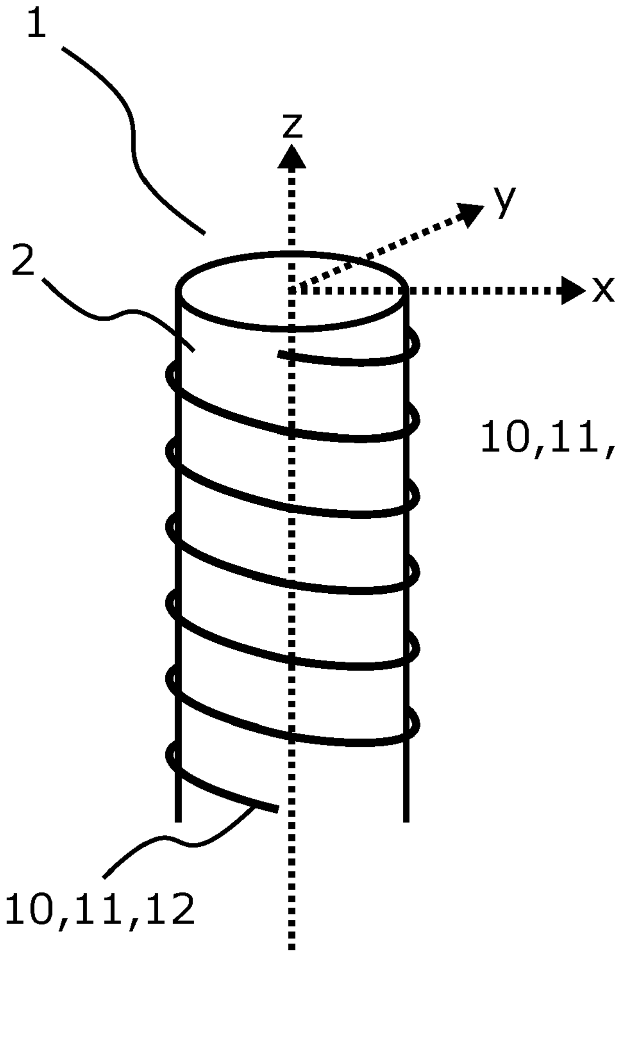


Fig. 1a

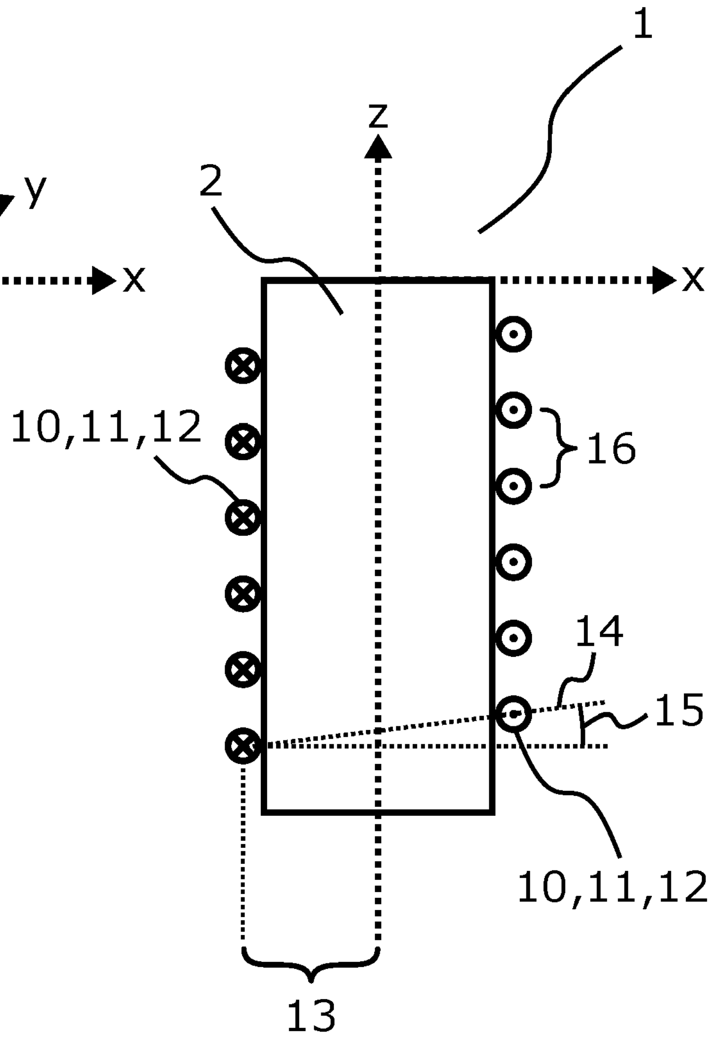


Fig. 1b

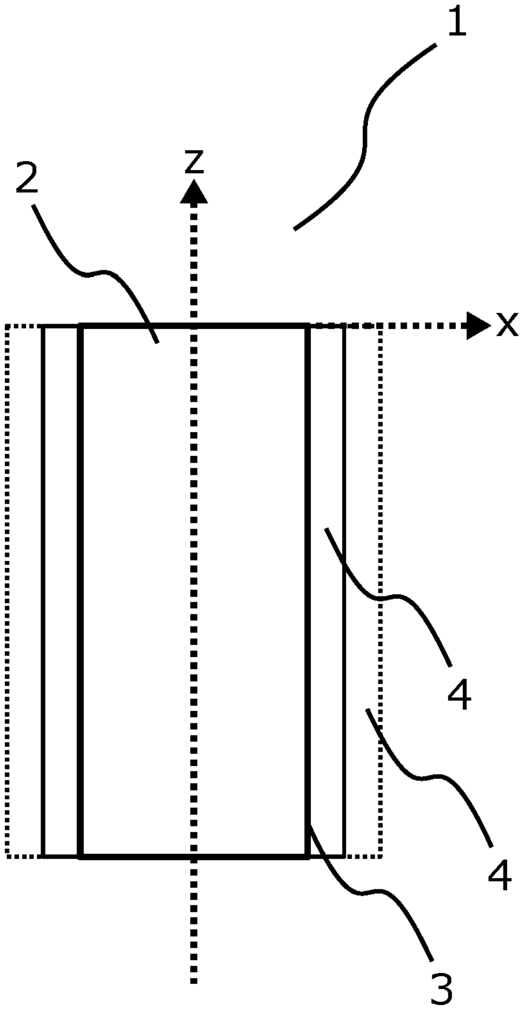


Fig. 2a

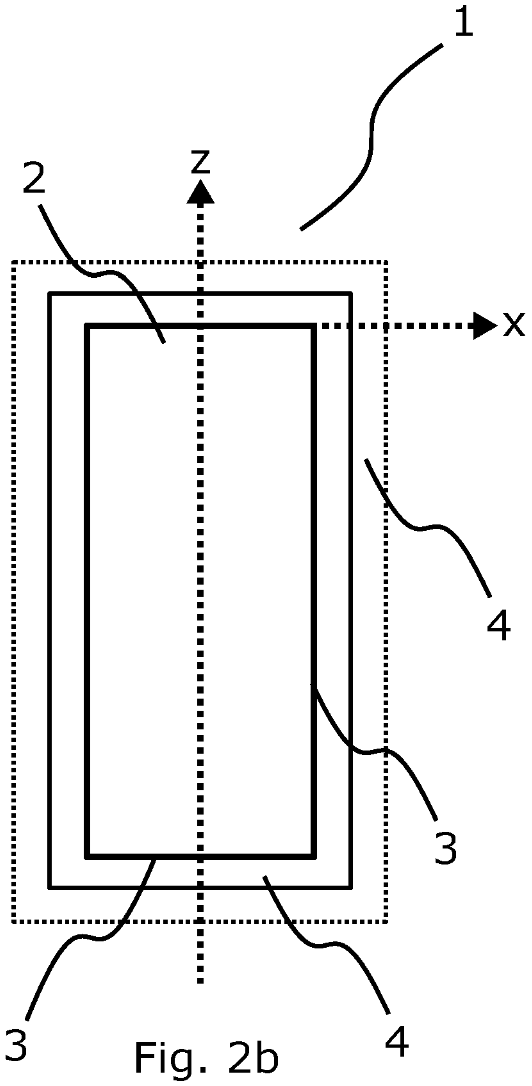


Fig. 2b

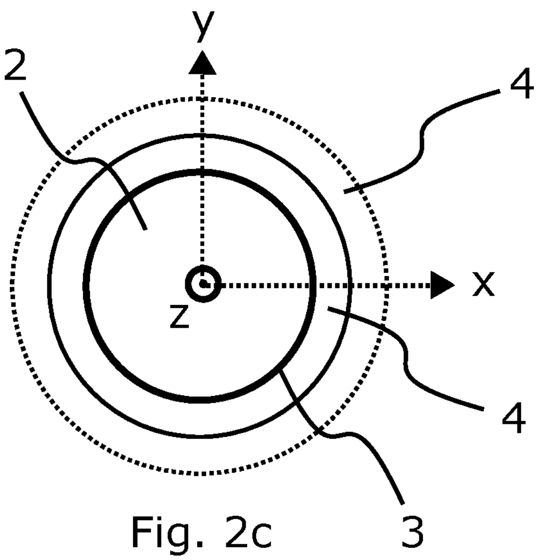


Fig. 2c

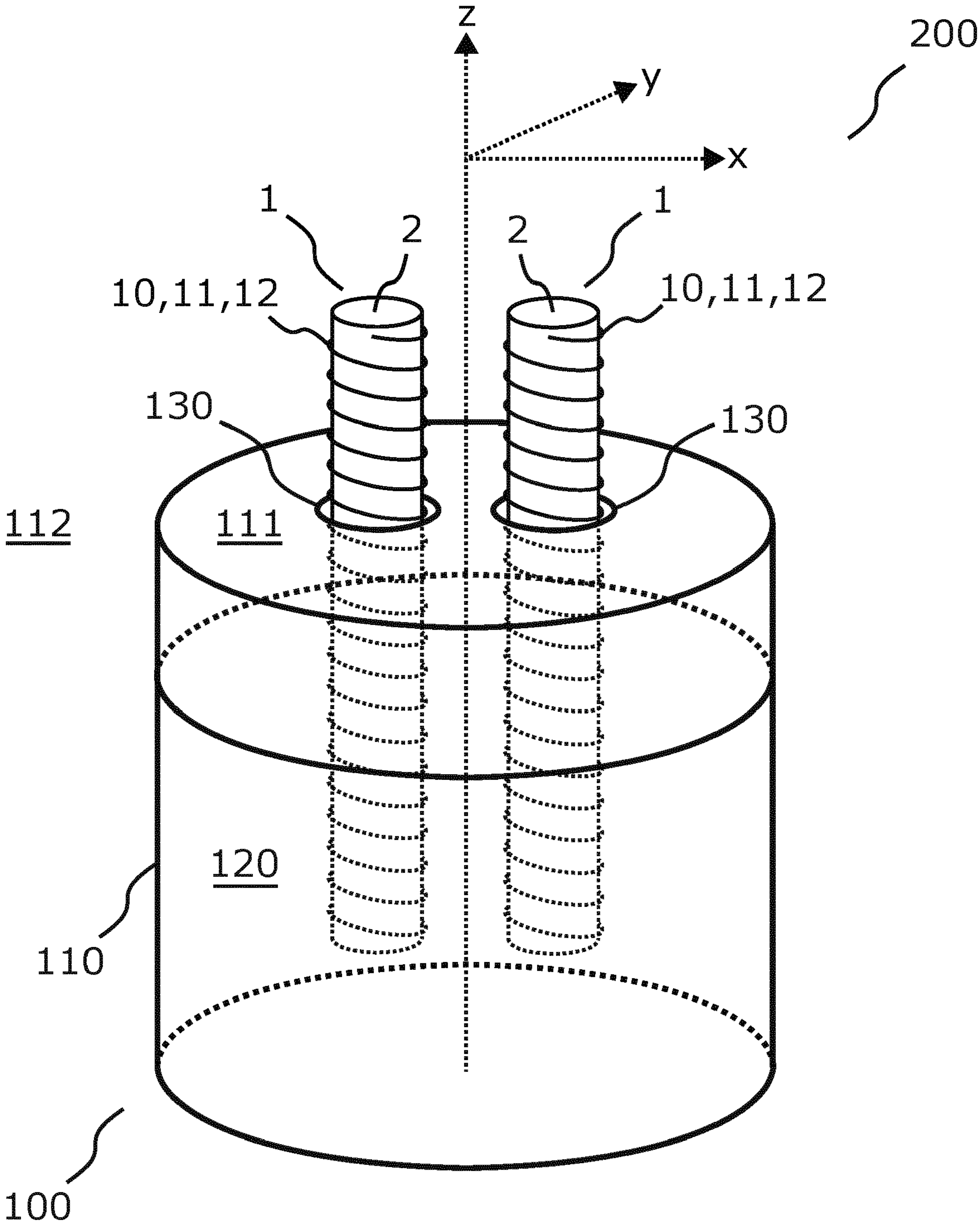


Fig. 3

Europäisches Patentamt
European Patent Office
Office européen des brevets

# EUROPEAN SEARCH REPORT

Application Number
EP 21 20 0270

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/358801 A1 (RUBINO ROBERT S [US] ET AL) 14 December 2017 (2017-12-14)<br>* paragraph [0041]; figure 7A * | 1-4 | INV.<br>H01M4/14<br>H01M10/12<br>H01M10/38<br><br>ADD.<br>H01M4/02 |
| X | EP 0 732 080 A1 (DAIG CORP [US])<br>18 September 1996 (1996-09-18)<br>* column 8, line 43 - line 44; claims 1,4; figures 2,3 * | 1-5 | |
| X<br>A | EP 1 120 848 A1 (MATSUSHITA ELECTRIC IND CO LTD [JP]) 1 August 2001 (2001-08-01)<br>* claim 1; figure 1 * | 6-8,10<br>9,11-14 | |
| X<br>A | WO 2016/125098 A1 (SOLIS HERRERA ARTURO [MX]) 11 August 2016 (2016-08-11)<br>* page 18, line 20 - line 25; figure 1 * | 6-8,10<br>9,11-14 | |

TECHNICAL FIELDS SEARCHED (IPC)
H01M

1 The present search report has been drawn up for all claims

| Place of search | Date of completion of the search | Examiner |
|---|---|---|
| Munich | 8 March 2022 | Hintermaier, Frank |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 21 20 0270

This annex lists the patent family members relating to the patent documents cited in the above-mentioned European search report. The members are as contained in the European Patent Office EDP file on
The European Patent Office is in no way liable for these particulars which are merely given for the purpose of information.

08-03-2022

| Patent document cited in search report | Publication date | Patent family member(s) | Publication date |
|---|---|---|---|
| US 2017358801 A1 | 14-12-2017 | NONE | |
| EP 0732080 A1 | 18-09-1996 | CA 2150894 A1 | 18-09-1996 |
| | | EP 0732080 A1 | 18-09-1996 |
| | | JP 3094895 B2 | 03-10-2000 |
| | | JP H08257033 A | 08-10-1996 |
| | | US 5676662 A | 14-10-1997 |
| EP 1120848 A1 | 01-08-2001 | CN 1316790 A | 10-10-2001 |
| | | EP 1120848 A1 | 01-08-2001 |
| | | JP 2001210366 A | 03-08-2001 |
| | | KR 20010082014 A | 29-08-2001 |
| | | US 6576373 B1 | 10-06-2003 |
| WO 2016125098 A1 | 11-08-2016 | LU 92649 B1 | 08-08-2016 |
| | | SG 11201706192Q A | 30-08-2017 |
| | | TW 201639986 A | 16-11-2016 |
| | | WO 2016125098 A1 | 11-08-2016 |

EPO FORM P0459

For more details about this annex : see Official Journal of the European Patent Office, No. 12/82